# EUROPEAN PATENT SPECIFICATION

(11) **EP 1 873 191 B1**
(45) Date of publication and mention of the grant of the patent: **28.03.2012**
(21) Application number: 06712785.2
(22) Date of filing: 01.02.2006
(51) Int. Cl.: C08J 3/22, C08J 3/215, C08K 3/00, B60C 1/00, C08K 3/04, C08K 3/34, C08L 21/00

(54) **METHOD FOR PRODUCING RUBBER-FILLER MASTER BATCH**
VERFAHREN ZUR MASTERBATCH-HERSTELLUNG FÜR EINEN KAUTSCHUKFÜLLSTOFF
COMPOSITE NON-TISSE/FILM COMPLETEMENT ELASTIQUE

(30) Priority: 03.02.2005 JP 2005027802
(43) Date of publication of application: 02.01.2008
(73) Proprietor: Bridgestone Corporation, Tokyo 104-8340 (JP)
(72) Inventor: YANAGISAWA, Kazuhiro, 1, Ogawahigashi-cho, Kodaira-shi, Tokyo, (JP); MASAKI, Kouji, 1, Ogawahigashi-cho, Kodaira-shi, Tokyo, (JP); SOMENO, Kazuaki, 1, Ogawahigashi-cho, Kodaira-shi Tokyo, (JP)
(74) Representative: Whalley, Kevin
(86) International application number: PCT/JP2006/301642
(87) International publication number: WO 2006/082840

(56) References cited:
- EP-A2- 1 270 648
- JP-A- 61 120 803
- JP-A- 2002 363 295
- US-A- 4 250 082
- BLACKFORD D B ET AL: "Particle size analysis of carbon black", PARTICLE AND PARTICLE SYSTEMS CHARACTERIZATION, VCH, WEINHEIM, DE, vol. 4, no. 3, 1 September 1987 (1987-09-01), pages 112-117, XP008084850, ISSN: 0934-0866, DOI: DOI:10.1002/PPSC.19870040123

## Description

### TECHNICAL FIELD

The present invention relates to a method for producing a rubber-filler master batch. More particularly, the present invention relates to a method for producing a rubber-filler master batch providing an excellent dispersion of a filler and excellent physical properties of a rubber.

### BACKGROUND ART

Heretofore, in the field of the rubber composition, it has been known that the method for producing a wet master batch can be used for improving the dispersion of a filler.

As the method for producing a wet master batch, the method comprising mixing a latex containing rubber dispersed in water and a slurry of a filler, followed by obtaining a coagulate has been conducted widely (refer to Patent Reference 1).

A method in which a solution of a polymer in an organic solvent produced by solution polymerization or the like is mixed with a slurry of a filler so that the molecular structure of the rubber can be selected as desired, is disclosed. For example, a method for producing a fluid rubber powder of a rubber/carbon black composite in the form of fine particles, which is characterized in that a rubber solution containing a polymer produced by a solution polymerization process dissolved in an organic solvent is introduced under stirring into a suspension of carbon black heated at a temperature which is approximately the boiling point of the organic solvent, the solvent is removed by distillation under the atmospheric pressure or under a vacuum during the introduction, the temperature of the reaction mixture is kept at a temperature which allows vaporization of the solvent by supplying heat energy during the distillation, transfer of the rubber to the aqueous suspension of carbon black and formation of the rubber/filler composite are conducted in water by removal of the organic phase by distillation, and then dehydration and drying are conducted, is known (refer to Patent Reference 2).

However, since the particle size distribution of carbon black in the suspension of carbon black is not taken into consideration in this method, the property for dispersion of the filler is varied depending on the condition of coagulation, and it is difficult that an excellent condition of dispersion is obtained with stability.
[Patent Reference 1] Japanese Patent Application Laid-Open No. 2004-99625
[Patent Reference 1] Japanese Patent Application Laid-Open No. 2003-26816

### DISCLOSURE OF THE INVENTION

The present invention has been made to solve the above problem and has an object of providing a method for producing a rubber-filler master batch exhibiting excellent physical properties by achieving the excellent condition of dispersion of the filler with stability.

As the result of intensive studies by the present inventors to achieve the above object, it was found that a rubber-filler master batch providing an excellent condition of dispersion and excellent physical properties of the rubber could be produced by using a slurry dispersed in water having a specific particle size distribution and conducting the drying under application of mechanical shear force in the drying step. The present invention has been completed based on the knowledge.

The present invention provides a method for producing a rubber-filler master batch which comprises mixing a rubber solution obtained by dissolving a diene-based rubber in an organic solvent into a slurry obtained by dispersing in water, in advance, carbon black, silica and/or at least one inorganic filler represented by the following general formula (I):

nM_{1·}xSiO_{y}·zH₂O (I)

[wherein M₁ represents at least one selected from the group consisting of metals which are aluminum, magnesium, titanium, calcium and zirconium, oxides and hydroxides of the metals, hydrates thereof and carbonates of the metals, n, x, y and z respectively represent an integer of 1 to 5, an integer of 0 to 10, an integer of 2 to 5 and an integer of 0 to 10], wherein
(1)
   (i) a particle size distribution of the filler in the slurry dispersed in water is such that a volume-average diameter of particles (mv) is 25 µm or smaller and diameters of particles in 90% by volume of entire particles (D90) are 30 µm or smaller, and
   (ii) a 24M4 DBP absorption of the filler recovered from the slurry dispersed in water by drying retains a value of 93% or greater of a 24M4 DBP absorption before being dispersed in water,
(2) the slurry dispersed in water and the rubber solution are mixed under stirring,
(3) a fluid mixture obtained by the mixing is heated at an azeotropic temperature or higher to coagulate the rubber in water while the organic solvent is removed, and
(4) the coagulated rubber is dehydrated and, thereafter, dried under the application of mechanical shear force.

### THE MOST PREFERRED EMBODIMENT TO CARRY OUT THE INVENTION

In present invention, in the step of mixing in which a rubber solution obtained by dissolving a diene-based rubber is mixed into a slurry obtained by dispersing a filler in water, the particle size distribution of the filler is such that the volume-average diameter of particles (mv) is 25 µm or smaller and preferably 20 µm or smaller and the diameters of particles in 90% by volume of the entire particles (D90) are 30 µm or smaller and preferably 25 µm or smaller since an excessively large particle size causes a decrease in the dispersion of the filler in the rubber, and there is the possibility that the reinforcing property and the abrasion resistance are decreased.

When a shear force in an excess amount is applied to the slurry to decrease the particle size, the structure of the filler is destroyed, and a decrease in the reinforcing property arises. Therefore, it is important that the 24M4 DBP absorption of the filler recovered from the slurry dispersed in water by drying retains a value of 93% or greater and preferably 96% or greater of the 24M4 DBP absorption before being dispersed in water.

In the above mixing step, the fluid mixture is heated at the azeotropic temperature or higher so that the organic solvent in the rubber solution is rapidly removed by distillation. In this case, the slurry dispersed in water may be heated in advance and added to the rubber solution. It is preferable that the temperature of the heating is 100°C or lower.

In the drying step in the method for producing a rubber-filler master batch of the present invention, it is important that the drying is conducted under application of mechanical shear force so that the dispersion of the filler is further improved. The physical properties of the rubber after being vulcanized can be remarkably improved by this treatment. For the method for drying under application of mechanical shear force, it is preferable that a continuous mixer is used from the standpoint of the productivity in the industrial production. It is more preferable that a multi-screw extruder having screws rotating in the same direction or in different directions is used so that the dispersion of the filler is improved.

In the step of drying under application of mechanical shear force, it is preferable that the content of water in the master batch before the drying step is 10% or greater. When the content of water is smaller than 10%, there is the possibility that the degree of improvement in the dispersion of the filler in the drying step is decreased.

In the present invention, it is preferable that the silica is a silica selected from wet silica, dry silica and colloidal silica.

It is preferable that the inorganic filler represented by general formula (I) described above is selected from a group consisting of alumina (Al₂O₃), alumina hydrate (Al₂O₃-H₂O), aluminum hydroxide [Al(OH)₃], aluminum carbonate [Al₂(CO₃)₂], magnesium hydroxide [Mg(OH)₂], magnesium oxide (MgO), magnesium carbonate (MgCO₃), talc (3MgO·4SiO₂·H₂O), attapulgite (5MgO·8SiO_{2·}9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃.2SiO₂), kaolin (Al₂O₃·2SiO₂·2H₂O), pyrofilite (Al₂O₃·4SiO₂·H₂O), bentonite (Al₂O₃·4SiO₂·2H₂O), aluminum silicate (Al₂SiO₅, Al₄·3SiO₄·5H₂O etc.), magnesium silicate (Mg₂SiO₄, MgSiO₃ etc.), calcium silicate (Ca₂·SiO₄ etc.), aluminum calcium silicate (Al₂O₃·CaO·2SiO₂ etc.), magnesium calcium silicate (CaMgSiO₄), calcium carbonate (CaCO₃), zirconium oxide (ZrO₂), zirconium hydroxide [Zr(OH)₂·nH₂O], zirconium carbonate [Zr(CO₃)₂] and crystalline aluminosilicates.

In the above general formula (I), it is preferable from the standpoint of the improvement in the reinforcing property that M₁ represents at least one selected from a group consisting of aluminum metal, the oxide and the hydroxide of aluminum, hydrates thereof and aluminum carbonate.

The diene-based rubber used in the present invention is not particularly limited. Styrene-butadiene rubber (SBR) prepared by solution polymerization, butadiene rubber (BR), butyl rubber, halogenated butyl rubber and ethylene-propylene-diene terpolymer rubbers (EPDM) are preferable.

To the rubber-filler master batch, where desired, various additives such as surfactants, vulcanizing agents, antioxidants, coloring agents and dispersants may be added in addition to carbon black, silica and/or the above inorganic filler represented by the general formula (I).

The rubber-filler master batch produced by the method of the present invention is further processed into various rubber compositions via dry mixing steps. Various chemicals conventionally used in the rubber industry such as vulcanizing agents, vulcanization accelerators and antioxidants can be added to the rubber compositions as long as the object of the present invention is not adversely affected.

The rubber composition of the present invention is used for various types of tires and various industrial rubber products such as conveyor belts and hoses.

### EXAMPLES

The present invention will be described more specifically with reference to examples in the following. However, the present invention is not limited to the examples.

The measurements in Examples and Comparative Examples were conducted in accordance with the following methods.

### (1) Measurement of the particle size distribution of a filler (the volume-average diameter of particles (mv) and the diameters of particles in 90% by volume of the entire particles (D90)) in a slurry

The measurement was conducted using a laser diffraction particle size analyzer (the MICROTRAC FRA type) in an aqueous medium (the refractive index: 1.33). As the particle refractive index, the value of 1.57 was used in all measurements. The measurement was conducted immediately after a dispersion was prepared so that re-aggregation of the filler is prevented.

### (2) 24M4 DBP absorption

The 24M4 DBP absorption was measured in accordance with the method of ISO 6894.

### (3) Dispersion of a filler

The dispersion of a filler was measured using DISPERGRADER 1000 manufactured by TECH PRO Company, USA. The X-value of the RCB method was used as the index. The greater the value, the better the dispersion of a filler.

### (4) Strength at break (tensile test)

The tensile test of a sample of a vulcanized rubber composition was conducted in accordance with the method of Japanese Industrial Standard K6251-1993, and the strength at break (Tb) measured at 23°C was obtained. The result is shown as an index using the result of Comparative Example 1 as the reference which is set at 100 for Example 1 and Comparative Examples 1 to 3 and using the result of Comparative Example 4 as the reference which is set at 100 for Example 2 and Comparative Examples 4 to 6. The greater the value, the better the strength.

### (5) Abrasion resistance

Using an abrasion tester of the Lambourn type, the amount of abrasion was measured at a slipping ratio of 40% at the room temperature. The inverse of the obtained value is expressed as an index using the result of Comparative Example 1 as the reference which is set at 100 for Example 1 and Comparative Examples 1 to 3 and using the result of Comparative Example 4 as the reference which is set at 100 for Example 2 and Comparative Examples 4 to 6. The greater the value, the better the abrasion resistance.

### Preparation Example 1 Preparation of a solution of SBR

Into a 800 ml pressure resistant glass vessel which had been dried and purged with nitrogen, a cyclohexane solution of butadiene (16% by mass) and a cyclohexane solution of styrene (21% by mass) were injected in amounts such that the amount of the butadiene monomer was 40 g and the amount of the styrene monomer was 10 g. Then, 0.24 mmole of 2,2-ditetrahydrofurylpropane was injected. After 0.48 mmole of n-butyllithium (Buli) was added, the temperature was raised at 50°C, and the polymerization was allowed to proceed for 1.5 hours. The conversion of the polymerization was approximately 100%. Then, 0.5 ml of a 5% by mass isopropanol solution of 2,6-t-butyl-p-cresol (BHT) was added to the polymerization system, and the reaction was terminated. The results obtained by the analysis of the obtained polymer are shown in Table 1.

### Preparation Example 2 Preparation of a solution of BR

Into a 800 ml pressure resistant glass vessel which had been dried and purged with nitrogen, a cyclohexane solution of butadiene (16% by mass) was injected in an amount such that the amount of the butadiene monomer was 50 g. Then, 0.44 mmole of 2,2-ditetrahydrofurylpropane was injected. After 0.48 mmole of n-butyllithium (Buli) was added, the temperature was raised at 50°C, and the polymerization was allowed to proceed for 1.5 hours. The conversion of the polymerization was approximately 100%. Then, 0.5 ml of a 5% by mass isopropanol solution of 2,6-t-butyl-p-cresol (BHT) was added to the polymerization system, and the reaction was terminated. The results obtained by the analysis of the obtained polymer are shown in Table 1.

**Table 1**

| | Preparation Example 1 | Preparation Example 2 |
|---|---|---|
| Polymer | SBR | BR |
| Content of styrene unit (% by mass) | 20 | - |
| Content of vinyl structure (%) | 58 | 59 |
| Molecular weight distribution | 1.1 | 1.1 |
| Weight-average molecular weight | 220,000 | 230,000 |

### Example 1

Water was added to wet silica (manufactured by NIPPON SILICA Co., Ltd.; NIPSIL VN3 (a trade name)) in an amount such that a 5% slurry could be prepared. The obtained mixture was treated by a colloid mill (the diameter of the rotor: 50 mm) at 8,000 rpm for 30 minutes, and a uniform slurry was obtained. The obtained slurry of silica showed the following values: mv: 10.6 µm; D90: 21.0 µm; and the retention of 24M4 DBP: 97%.

The slurry obtained above was transferred to a pressure resistant tank equipped with a stirrer. While the tank was heated at 80°C with steam, the cyclohexane solution of SBR prepared in Preparation Example 1 was added under stirring in an amount such that the ratio of the amounts by mass of SBR to silica was 2:1. The steam stripping was conducted, and a coagulate was obtained. After the coagulate was dehydrated by the centrifugation until the content of water was reduced to about 30%, the obtained product was dried by mixing in a twin screw extruder (manufactured by KOBE SEIKO Co., Ltd.; KTX30) at a barrel temperature of 110°C, and SBR master batch A was obtained.

### Comparative Example 1

Distilled water was transferred into a pressure resistant tank equipped with a stirrer and heated at 80°C with steam. Under stirring, the cyclohexane solution of SBR prepared in Preparation Example 1 was added. After the steam stripping was conducted to obtain a coagulate, the product was dehydrated and dried in a vacuum, and SBR rubber containing no filler was obtained.

### Comparative Example 2

The same procedures as those conducted in Example 1 were conducted through the step of centrifugation. The product was dried in a vacuum without treatment under mechanical shear force, and SBR master batch B was obtained.

### Comparative Example 3

Water was added to wet silica (manufactured by NIPPON SILICA Co., Ltd.; NIPSIL VN3 (a trade name)) in an amount such that a 5% slurry could be prepared. The obtained mixture was treated by a homomixer at 4,000 rpm for 30 minutes, and a uniform slurry was obtained. The obtained slurry of silica showed the following values: mv: 28.2 µm; D90: 67.7 µm; and the retention of 24M4 DBP: 99%.

The slurry obtained above was transferred to a pressure resistant tank equipped with a stirrer. While the tank was heated at 80°C with steam, the cyclohexane solution of SBR prepared in Preparation Example 1 was added under stirring in an amount such that the ratio of the amounts by mass of SBR to silica was 2:1. The steam stripping was conducted, and a coagulate was obtained. After the coagulate was dehydrated by the centrifugation until the content of water was reduced to about 30%, the obtained product was dried by mixing in a twin screw extruder (manufactured by KOBE SEIKO Co., Ltd.; KTX39) at a barrel temperature of 110°C, and SBR master batch C was obtained.

SBR master batches A to C and SBR rubber prepared in Preparation Example 1 which were obtained in Example 1 and Comparative Examples 1 to 3 were each mixed in a Banbury mixer in accordance with the formulation shown in Table 2 and vulcanized. The dispersion of the filler, the strength at break and the abrasion resistance were measured. The results are shown in Table 2.

**Table 2**

| Example | 1 | | | |
|---|---|---|---|---|
| Comparative Example | | 1 | 2 | 3 |
| SBR master batch A | 150 | | | |
| SBR master batch B | | | 150 | |
| SBR master batch C | | | | 150 |
| SBR prepared in Preparation Example 1 | | 100 | | |
| Silica (NIPSIL VN3) | | 50 | | |
| Silane coupling agent (Si69) | 5 | 5 | 5 | 5 |
| Stearic acid | 2 | 2 | 2 | 2 |
| Antioxidant 6C | 1 | 1 | 1 | 1 |
| Wax | 1 | 1 | 1 | 1 |
| Zinc oxide | 4 | 4 | 4 | 4 |
| Vulcanization accelerator DPG | 1 | 1 | 1 | 1 |
| Vulcanization accelerator NS | 1.5 | 1.5 | 1.5 | 1.5 |
| Sulfur | 1.5 | 1.5 | 1.5 | 1.5 |
| Dispersion of filler | 8.2 | 5.5 | 6.8 | 6.5 |
| Strength at break | 111 | 100 | 103 | 99 |
| Abrasion resistance | 108 | 100 | 101 | 102 |

Trade names of the organic chemicals used in Table 2 are shown in the following.
Silane coupling agent: manufactured by DEGUSSA Company; the trade name: Si69
Antioxidant 6C: manufactured by OUCHI SHINKO KAGAKU KOGYO CO., Ltd.; the trade name: NOCRAC 6C
Wax: manufactured by OUCHI SHINKO KAGAKU KOGYO CO., Ltd.; the trade name: SUNNOC
Zinc oxide: manufactured by HAKUSUI KAGAKU Co., Ltd.; the trade name: ZINC OXIDE No. 1
Vulcanization accelerator DPG: manufactured by OUCHI SHINKO KAGAKU KOGYO CO., Ltd.; the trade name: NOCCELER D
Vulcanization accelerator NS: manufactured by OUCHI SHINKO KAGAKU KOGYO CO., Ltd.; the trade name: NOCCELER NS
Sulfur: manufactured by KARUIZAWA SEIRENSHO Co., Ltd.

As shown in Table 2, the rubber composition of the present invention (Example 1) exhibited more excellent dispersion of the filler, strength at break and abrasion resistance than those of the rubber composition prepared by dry mixing (Comparative Example 1), the rubber composition using the master batch obtained by drying in a vacuum without the application of mechanical shear force (Comparative Example 2) and the rubber composition using the master batch using a slurry exhibiting insufficient dispersion (Comparative Example 3).

### Example 2

Water was added to carbon black N234 (manufactured by TOKAI CARBON Co., Ltd.; SIEST 7HM (a trade name)) in an amount such that a 5% slurry could be prepared. The obtained mixture was treated by a colloid mill (the diameter of the rotor: 50 mm) at 8,000 rpm for 30 minutes, and a uniform slurry was obtained. The obtained slurry of silica showed the following values: mv: 12.5 µm; D90: 24.2 µm; and the retention of 24M4 DBP: 97%.

The slurry obtained above was transferred to a pressure resistant tank equipped with a stirrer. While the tank was heated at 80°C with steam, the cyclohexane solution of BR prepared in Preparation Example 2 was added under stirring in an amount such that the ratio of the amounts by mass of BR to silica was 2:1. The steam stripping was conducted, and a coagulate was obtained. After the coagulate was dehydrated by the centrifugation until the content of water was reduced to about 30%, the obtained product was dried by mixing in a twin screw extruder (manufactured by KOBE SEIKO Co., Ltd.; KTX30) at a barrel temperature of 110°C, and BR master batch A was obtained.

### Comparative Example 4

Distilled water was transferred into a pressure resistant tank equipped with a stirrer and heated at 80°C with steam. Under stirring, the cyclohexane solution of BR prepared in Preparation Example 2 was added. After the steam stripping was conducted to obtain a coagulation product, the product was dehydrated and dried in a vacuum, and BR rubber containing no filler was obtained.

### Comparative Example 5

The same procedures up to the step of centrifugation as those conducted in Example 2 were repeated. The product was dried in a vacuum without the treatment under mechanical shear force, and BR master batch B was obtained.

### Comparative Example 6

Water was added to carbon black N234 (manufactured by TOKAI CARBON Co., Ltd.; SIEST 7HM (a trade name)) in an amount such that a 5% slurry could be prepared. The obtained mixture was treated by a homomixer at 4,000 rpm for 30 minutes, and a uniform slurry was obtained. The obtained slurry of silica showed the following values: mv: 35.3 µm; D90: 62.5 µm; and the retention of 24M4 DBP: 99%.

The slurry obtained above was transferred to a pressure resistant tank equipped with a stirrer. While the tank was heated at 80°C with steam, the cyclohexane solution of BR prepared in Preparation Example 2 was added under stirring in an amount such that the ratio of the amounts by mass of BR to silica was 2:1. The steam stripping was conducted, and a coagulate was obtained. After the coagulate was dehydrated by the centrifugation until the content of water was reduced to about 30%, the obtained product was dried by mixing in a twin screw extruder (manufactured by KOBE SEIKO Co., Ltd.; KTX30) at a barrel temperature of 110°C, and BR master batch C was obtained.

Natural rubber RSS #3 and carbon black N234 were mixed in a Banbury mixer in amounts such that the ratio of the amounts by mass of natural rubber to carbon black was 2:1, and a dry master batch of natural rubber composed of 100 parts by mass of natural rubber and 50 parts by mass of carbon black was prepared.

BR master batches A to C and BR rubber obtained in Example 2 and Comparative Examples 4 to 6 were each mixed with the dry master batch of natural rubber in a Banbury mixer in accordance with the formulations shown in Table 3 and vulcanized. The dispersion of the filler, the strength at break and the abrasion resistance of the vulcanization products were measured. The results are shown in Table 3. The names of the organic and inorganic chemicals in Table 3 are as shown in Table 2.

**Table 3**

| Example | 2 | | | |
|---|---|---|---|---|
| Comparative Example | | 4 | 5 | 6 |
| BR master batch A | 60 | | | |
| BR master batch B | | | 60 | |
| BR master batch C | | | | 60 |
| Dry master batch of natural rubber | 90 | 90 | 90 | 90 |
| BR prepared in Preparation Example 2 | | 40 | | |
| Carbon black N234 | | 20 | | |
| Stearic acid | 2 | 2 | 2 | 2 |
| Antioxidant 6C | 1 | 1 | 1 | 1 |
| Wax | 1 | 1 | 1 | 1 |
| Zinc oxide | 4 | 4 | 4 | 4 |
| Vulcanization accelerator NS | 1.5 | 1.5 | 1.5 | 1.5 |
| Sulfur | 1.5 | 1.5 | 1.5 | 1.5 |
| Dispersion of filler | 8.8 | 5.8 | 6.3 | 6.6 |
| Strength at break | 109 | 100 | 98 | 99 |
| Abrasion resistance | 115 | 100 | 102 | 102 |

As shown in Table 3, the rubber composition of the present invention (Example 2) exhibited more excellent dispersion of the filler, strength at break and abrasion resistance than those of the rubber composition prepared by dry mixing (Comparative Example 4), the rubber composition using the master batch obtained by drying in a vacuum without the application of mechanical shear force (Comparative Example 5) and the rubber composition using the master batch using a slurry exhibiting insufficient dispersion (Comparative Example 6).

### INDUSTRIAL APPLICABILITY

In accordance with the method for producing the master batch of the present invention, the excellent condition of dispersion of the filler can be obtained with stability. Since the obtained rubber-filler master batch provides the excellent physical properties of the vulcanized rubber, the master batch can be advantageously applied, as various rubber compositions, to members such as tread rubbers, side wall rubbers and rubber chafers, of various tires such as radial tires for passenger cars, radial tires for truck and busses and radial tires for off-the-road vehicles, and to members of industrial rubber products such as conveyor belts.

## Claims

1. A method for producing a rubber-filler master batch which comprises mixing a rubber solution obtained by dissolving a diene-based rubber in an organic solvent into a slurry obtained by dispersing in water, in advance, carbon black, silica and/or at least one inorganic filler represented by the following general formula (I):
nM₁·xSiO_{y}·zH₂O (I)
[wherein M₁ represents at least one selected from the group consisting of metals which are aluminum, magnesium, titanium, calcium and zirconium, oxides and hydroxides of the metals, hydrates thereof and carbonates of the metals, and n, x, y and z respectively represent an integer of 1 to 5, an integer of 0 to 10, an integer of 2 to 5 and an integer of 0 to 10],
wherein
(1)
(i) a particle size distribution of the filler in the slurry dispersed in water is such that a volume-average diameter of particles (mv) is 25 µm or smaller and diameters of particles in 90% by volume of the entire particles (D90) are 30 µm or smaller, and
(ii) a 24M4 DBP absorption of the filler recovered from the slurry dispersed in water by drying retains a value of 93% or greater of a 24M4 DBP absorption before being dispersed in water,
(2) the slurry dispersed in water and the rubber solution are mixed under stirring,
(3) a fluid mixture obtained by the mixing is heated at an azeotropic temperature or higher to coagulate the rubber in water while the organic solvent is removed, and
(4) the coagulated rubber is dehydrated and, thereafter, dried under the application of mechanical shear force.

2. A method for producing a rubber-filler master batch according to Claim 1, wherein the silica is a silica selected from wet silica, dry silica and colloidal silica.

3. A method for producing a rubber-filler master batch according to Claim 1, wherein the inorganic filler represented by the general formula (I) is at least one inorganic filler selected from the group consisting of alumina (Al₂O₃), alumina hydrate (Al₂O₃·H₂O), aluminum hydroxide [Al(OH)₃], aluminum carbonate [Al₂(CO₃)₂], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrofilite (Al₂O₃·4SiO₂·H₂O), bentonite (Al₂O₃·4SiO₂·2H₂O), aluminum silicate (Al₂SiO₅, Al₄·3SiO₄·5H₂O etc.), magnesium silicate (Mg₂SiO₄, MgSiO₃ etc.), calcium silicate (Ca₂·SiO₄ etc.), aluminum calcium silicate (Al₂O₃·CaO·2SiO₂ etc.), magnesium calcium silicate (CaMgSiO₄), calcium carbonate (CaCO₃), zirconium oxide (ZrO₂), zirconium hydroxide [Zr(OH)₂·nH₂O], zirconium carbonate [Zr(CO₃)₂] and crystalline aluminosilicates.

4. A method for producing a rubber-filler master batch according to Claim 1, wherein, in the general formula (I), M₁ represents at least one selected from the group consisting of aluminum metal, an oxide and a hydroxide of aluminum, hydrates thereof and aluminum carbonate.

5. A method for producing a rubber-filler master batch according to any one of Claims 1 to 4, wherein the drying is conducted using a continuous mixer.

6. A method for producing a rubber-filler master batch according to Claim 5, wherein the continuous mixer is a multi-screw extruder.

7. A rubber master batch produced by a method for producing a rubber-filler master batch described in any one of Claims 1 to 6.

8. A rubber composition produced by using the rubber master batch described in Claim 7.

9. A tire produced by using the rubber composition described in Claim 8.

## Patentansprüche

1. Verfahren zur Herstellung eines Kautschuk-Füllstoff-Masterbatches, das das Einmischen einer Kautsehulclösung, die durch Lösen eines Kautschuks auf Dienbasis in einem organischen Lösungsmittel erhalten worden ist, in eine Aufschlämmung umfasst, die durch vorheriges Dispergieren in Wasser von Ruß, Siliciumdioxid und/oder mindestens einem anorganischen Füllstoff erhalten worden ist, der durch die folgende allgemeine Formel (I):
nM₁·xSiO_{y}·zH₂O (I)
dargestellt ist [wobei M_{I} mindestens eines darstellt ausgewählt aus der Gruppe bestehend aus Metallen, die Aluminium, Magnesium, Titan, Calcium und Zirconium sind, Oxiden und Hydroxiden der Metalle, Hydraten derselben und Carbonaten der Metalle und n, x, y und z jeweils eine ganze Zahl von 1 bis 5, eine ganze Zahl von 0 bis 10, eine ganze Zahl von 2 bis 5 und eine ganze Zahl von 0 bis 10 darstellen],
wobei
(1)
(i) eine Teilchengrößenverteilung des Füllstoffes in der in Wasser dispergierten Aufschlämmung derart ist, dass ein volumendurchschnitrlicher Durchmesser von Teilchen (mv) 25 µm oder weniger beträgt und die Teilchendurchmesser in 90 Volumen-% der gesamten Teilchen (D90) 30 µm oder weniger betragen und
(ii) eine 24M4-DBP-Absorption des Füllstoffs, der aus der in Wasser dispergierten Aufschlämmung durch Trocknen gewonnen wird, einen Wert von 93 % oder mehr einer 24M4-DBP-Absorption vor dem Dispergieren in Wasser beibehält,
(2) die in Wasser dispergierte Aufschlämmung und die Kautschuklösung unter Rühren gemischt werden,
(3) eine Fluidmischung, die durch das Mischen erhalten worden ist, bei einer azeotropen oder höheren Temperatur erhitzt wird, um den Kautschuk in Wasser zu koagulieren, während das organische Lösungsmittel entfernt wird und
(4) der koagulierte Kautschuk dehydratisiert und daraufhin unter Anwendung mechanischer Scherkraft getrocknet wird.

2. Verfahren zur Herstellung eines Kautschuk-Füllstoff-Masterbatches nach Anspruch 1, wobei das Siliciumdioxid ein Siliciumdioxid ist, das unter nassem Siliciumdioxid, trockenem Siliciumdioxid und kolloidalem Siliziumdioxid ausgewählt wird.

3. Verfahren zur Verstellung eines Kautschuk-Füllstoff-Masterbatches nach Anspruch 1, wobei der anorganische Füllstoff, der durch die allgemeine Formel (I) dargestellt ist, mindesten ein anorganischer Füllstoff ist ausgewählt aus der Gruppe bestehend aus Aluminiumoxid (Al₂O₃), Aliuniniumoxidbydrat (Al₂O₃·H₂O), Aluminiumhydroxid [Al(OH)₃], Aluminiumcarbonat [Al₂(CO₃)₂], Magnesiumhydroxid [Mg(OH)₂], Magnesiumoxid (MgO), Maguesiumcarbonat (MgCO₃), Talkum (3MgO·₄SiO₂·H₂O), Attapulgit (5MgO·8SiO₂·9H₂O), Titanweiß (TiO₂), Titanschwarz (TiO₂ₙ₋₁), Calciumoxid (CaO), Calciumhydroxid [Ca(OH)₂], Aluminium-Magnesiumoxid (MgO·Al₂O₃), Ton (Al₂O₃·2SiO₂), Kaolin (Al₂O₃·2SiO₂·2H₂O), Pyrofilit (Al₂O₃·4SiO₂·H₂O), Bentonit (Al₂O₃·4SiO₂·2H₂O), Aluminiumsilicat (Al₂SiO₅, Al₄·3SiO4·5H₂O etc.), Magnesiumsilicat (Mg₂SiO₄, MgSiO₃ etc.), Calciumsilicat (Ca₂·SiO4 etc.), Aluminium-Calciumsilicat (Al₂O₃·CaO·2SiO₂ etc.), Magnesium-Calciumsilicat (CaMgSiO₄), Calciumcarbonat (CaCO₃), Zirconiumoxid (ZrO₂), Zirconiumhydroxid [Zr(OH)₂·nH₂O], Zirconiumcarbonat [Zr(CO₃)₂] und kristallinen Aluminosilicaten.

4. Verfahren zur Herstellung eines Kautschuk-Füllstoff-Masterbatches nach Anspruch I, wobei in der allgemeinen Formel (I) M₁ mindestens eines darstellt ausgewählt aus der Gruppe bestehend aus Aluminiummetall, einem Oxid und einem Hydroxyd von Aluminium, Hydraten davon und Aluminiumcarbonat.

5. Verfahren zur Herstellung eines Kautschuk-Füllstoff-Masterbatches nach einem der Ansprüche 1 bis 4, wobei das Trocknen unter Anwendung einer kontinuierlichen Mischvorrichtung durchgeführt wird.

6. Verfahren zur Herstellung eines Kautschuk-Füllstoff-Masterbatches nach Anspruch 5, wobei die kontinuierliche Mischvorrichtung ein Mehrfachschneckenextruder ist.

7. Kautschukmasterbatch hergestellt durch ein Verfahren zur Herstellung eines Kautschuk-Füllstoff-Masterbatches, das in einem der Ansprüche 1 bis 6 beschrieben ist.

8. Kautschukzusammenstzung hergestellt durch Verwendung des in Beispiel 7 beschriebenen Kautschukmasterbatches.

9. Reifen, der unter Anwendung der in Anspruch 8 beschriebenen Kautschukzusammensetzung hergestellt wird.

## Revendications

1. Procédé pour la production d'un mélange maître de caoutchouc-charge qui comprend le mélange d'une solution de caoutchouc obtenue en dissolvant un caoutchouc à base de diène dans un solvant organique dans une suspension obtenue en dispersant dans de l'eau, à l'avance, un noir de carbone, une silice et/ou au moins une charge inorganique représentée par la formule générale (I) suivante:
nM₁·xSiO_{y}·zH₂O (I)
[dans laquelle M₁ représente au moins un choisi dans le groupe constitué de métaux qui sont l'aluminium, le magnésium, le titane, le calcium et le zirconium, d'oxydes et d'hydroxydes des métaux, d'hydrates de ceux-ci et de carbonates des métaux, et n, x, y et z représentent respectivement un nombre entier de 1 à 5, un nombre entier de 0 à 10, µm nombre entier de 2 à 5 et un nombre entier de 0 à 10],
dans lequel:
(1)
(i) la distribution de tailles de particules de la charge dans la suspension dispersée dans l'eau est telle que le diamètre moyen en volume des particules (mv) est de 25 µm ou moins et les diamètres de particules dans 90% en volume de toutes les particules (D90) sont de 30 µm ou moins, et
(ii) l'absorption 24M4 DBP de la charge récupérée à partir de la suspension dispersée dans l'eau par un séchage conserve une valeur de 93% ou plus d'une absorption 24M4 DBP avant d'être dispersée dans l'eau,
(2) la suspension dispersée dans l'eau et la solution de caoutchouc sont mélangées sous agitation,
(3) un mélange de fluides obtenu par le mélange est chauffé à une température azéotrope ou supérieure pour coaguler le caoutchouc dans l'eau tandis que le solvant organique est retiré, et
(4) le caoutchouc coagulé est déshydraté et, par la suite, séché sous l'application d'une force de cisaillement mécanique.

2. Procédé pour la production d'un mélange maître de caoutchouc-charge selon la revendication 1, dans lequel la silice est une silice choisie parmi une silice humide, une silice sèche et une silice colloïdale.

3. Procédé pour la production d'un mélange maître de caoutchouc-charge selon la revendication 1, dans lequel la charge inorganique représentée par la formule générale (I) est au moins une charge inorganique choisie dans le groupe constitué d'alumine (Al₂O₃), d'hydrate d'alumine (Al₂O₃·H₂O), d'hydroxyde d'aluminium [Al(OH)₃], de carbonate d'aluminium [Al₂(CO₃)₂], d'hydroxyde de magnésium [Mg(OH)₂], d'oxyde de magnésium (MgO), de carbonate de magnésium (MgCO₃), de talc (3MgO·4SiO₂·H₂O), d'attalpulgite (5MgO·8SiO₂·9H₂O), de blanc de titane (TiO₂), de noir de titane (TiO₂ₙ₋₁), d'oxyde de calcium (CaO), d'hydroxyde de calcium [Ca(OH)₂], d'oxyde d'aluminium et de magnésium (MgO·Al₂O₃), d'argile (Al₂O₃·2SiO₂), de kaolin (Al₂O₃·2SiO₂·2H₂O), de pyrofilite (Al₂O₃·4SiO₂·H₂O), de bentonite (Al₂O₃·4SiO₂·2H₂O), de silicate d'aluminium (Al₂SiO₅, Al₄·3SiO₄·5H₂O, etc.), de silicate de magnésium (Mg₂SiO₄, MgSiO₃, etc.), de silicate de calcium (Ca₂·SiO_{4,} etc.), de silicate d'aluminium et de calcium (Al₂O₃·CaO·2SiO₂, etc.), de silicate de magnésium et de calcium (CaMgSiO₄), de carbonate de calcium (CaCO₃), d'oxyde de zirconium (ZrO₂), d'hydroxyde de zirconium [Zr(OH)₂·nH₂O], de carbonate de zirconium [Zr(CO₃)₂] et d'aluminosilicates cristallins.

4. Procédé pour la production d'un mélange maître de caoutchouc-charge selon la revendication 1, dans lequel, dans la Formule générale (I), M₁ représente au moins un choisi dans le groupe constitué d'aluminium métallique, d'un oxyde et d'un hydroxyde d'aluminium, d'hydrates de ceux-ci et de carbonate d'aluminium.

5. Procédé pour la production d'un mélange maître de caoutchouc-charge selon l'une quelconque des revendications 1 à 4, dans lequel le séchage est conduit en utilisant un mélangeur continu.

6. Procédé pour la production d'un mélange maître de caoutchouc-charge selon la revendication 5, dans lequel le mélangeur contenu est une extrudeuse à vis multiples.

7. Mélange maître de caoutchouc produit par un procédé pour la production d'un mélange maître de caoutchouc-charge décrit dans l'une quelconque des revendications 1 à 6.

8. Composition de caoutchouc produite en utilisant le mélange maître de caoutchouc décrit dans la revendication 7.

9. Pneu produit en utilisant la composition de caoutchouc décrite dans la revendication 8.
